# EUROPÄISCHE PATENTSCHRIFT

(11) **EP 3 415 344 B1**
(45) Veröffentlichungstag und Bekanntmachung des Hinweises auf die Patenterteilung: **10.06.2020**
(21) Anmeldenummer: 18162687.0
(22) Anmeldetag: 20.03.2018
(51) Int. Cl.: B60C 11/12

(54) **FAHRZEUGLUFTREIFEN**
PNEUMATIC TYRES FOR A VEHICLE
PNEUMATIQUE DE VÉHICULE

(30) Priorität: 15.06.2017 DE 102017210087
(43) Veröffentlichungstag der Anmeldung: 19.12.2018
(73) Patentinhaber: Continental Reifen Deutschland GmbH, 30165 Hannover (DE)
(72) Erfinder: Yeo, Chun Yi, 30627 Hannover (DE); Lutz, André, 30167 Hannover (DE)
(74) Vertreter: Finger, Karsten

(56) Entgegenhaltungen:
- EP-B1- 0 547 019
- JP-A- S6 447 603
- JP-A- S63 291 706
- JP-A- 2000 238 514
- JP-A- 2000 255 220
- JP-A- 2007 196 969
- JP-A- 2009 006 772
- JP-A- 2013 119 350
- US-B1- 6 408 911

## Beschreibung

Die Erfindung betrifft einen Fahrzeugluftreifen mit einem Laufstreifen mit zumindest einer Profilrippe und/oder zumindest einer Profilblockreihe mit in Umfangsrichtung aufeinander folgenden Profilblöcken, wobei die Profilrippe bzw. die Profilblockreihe seitlich Profilrippenflanken bzw. Profilblockflanken aufweist, die jeweils eine in Umfangsrichtung umlaufenden Umfangsrille begrenzen, wobei die Profilrippe bzw. die Profilblöcke der Profilblockreihe ausschließlich mit in Draufsicht U-förmig verlaufenden, eine Breite von 0,4 mm bis 1,2 mm und eine Tiefe von 30% bis 90% der Profiltiefe aufweisenden Einschnitten versehen sind, die sich jeweils aus einem in Umfangsrichtung verlaufenden Einschnittabschnitt und zwei von diesem zu den seitlichen Profilblockflanken bzw. Profilrippenflanken verlaufenden Einschnittabschnitten zusammensetzen.

Ein derartiger Fahrzeugluftreifen ist beispielsweise aus der JP S63 291 706 A bekannt. Gemäß einer Variante weist der Laufstreifen dieses Fahrzeugluftreifens eine beidseitig von in Draufsicht zick-zack-förmig verlaufenden Umfangsrillen begrenzte, mittlere Profilblockreihe auf, deren Profilblöcke mit in Draufsicht U-förmig verlaufenden Einschnitten versehen sind. Die Einschnitte sind dabei im Bereich der durch den Verlauf der Umfangsrille bedingten "Zacken", bzw. "Spitzen" der Profilblöcke ausgebildet. Diese Maßnahmen sollen im Hinblick auf das Abriebverhalten des Laufstreifens vorteilhaft sein.

Aus der EP 0 547 019 B1 ist ferner ein Fahrzeugluftreifen, welcher insbesondere ein Reifen für Personenkraftwagen ist, bekannt. Der Laufstreifen dieses Reifens weist zumindest zwei im mittleren Bereich vorgesehene Profilblockreihen mit durch Querrillen voneinander getrennten Profilblöcken auf, die mit in Draufsicht im Wesentlichen U-förmigen Einschnitten versehen sind, die den Flächenschwerpunkt der Blöcke umschließen und deren freie Schenkelenden bis zu den Umfangsrillen verlaufen. In den innerhalb einer Blockreihe aufeinanderfolgenden Blöcken sind die U-förmigen Einschnitte derart angeordnet, dass ein Block, in welchem die freien Schenkelenden zu der einen die Profilblockreihe begrenzenden Umfangsrille verlaufen, mit einem Block, in welchem die freien Schenkelenden zu der anderen die Profilblockreihe begrenzenden Umfangsrille verlaufen, abwechselt. Ein Reifen mit einem derart gestalteten Laufstreifen soll vor allem hinsichtlich der Nassgriffeigenschaften und der Handlingeigenschaften verbessert sein.

Die JP 2013 119 350 A offenbart einen Fahrzeugluftreifen mit einem Laufstreifen mit Profilblöcken mit einer Vielzahl von in Draufsicht U-förmig verlaufenden, oberflächlich ausgebildeten Mikrorillen mit einer Tiefe von 0,2 mm bis 1,0 mm. Die Mikrorillen sind in Gruppen angeordnet, welche in zumindest drei unterschiedlichen Richtungen orientiert sind, sodass diese beispielsweise um 120° oder um 90° zueinander verdreht ausgebildet sind. Die Schenkelenden der U-förmig verlaufenden Mikrorillen sind voneinander abgewandt. Derartige Mikrorillen sollen die Fahreigenschaften auf eisiger Fahrbahn verbessern.

Ferner offenbart die JP 2009 006 772 A einen Fahrzeugluftreifen mit einem Laufstreifen mit Profilrippen, welche mit einander axial gegenüberliegenden Einschnittgruppen versehen sind. Jede Einschnittgruppe weist einen in Draufsicht U-förmig verlaufenden Einschnitt, dessen Schenkelenden bis zum jeweiligen seitlichen Rand der Profilrippe verlaufen, und eine Anzahl von parallel zu den Schenkeln des U-förmig verlaufenden Einschnittes verlaufende kurze Einschnitte auf.

Insbesondere bei Nutzfahrzeugreifen, aber auch bei Reifen für Personenkraftwagen oder Motorradreifen ist, je nach Laufstreifenausgestaltung, eine besondere Form des Reifenverschleißes, die sogenannte Sägezahnbildung, ein Problem. Als Sägezahnbildung wird eine unregelmäßige Schrägabnutzung von durch Querrillen voneinander getrennten Profilblöcken oder von Profilrippen, die mit durchquerenden Einschnitten versehen sind, bezeichnet. Diese Abnützung erinnert von der Seite des Reifens her betrachtet an Sägezähne. Die Ursache liegt meist darin, dass beim Abrollen des Reifens die Profilpositive beim Auftreffen am Untergrund belastet und in Laufrichtung gestaucht werden. Beim weiteren Abrollen erfolgt beim Austreten aus dem Untergrund die Entlastung und es kommt zu Schlupfbewegungen, bei Profilblöcken an der rückwärtigen Profilblockkante, bei Profilrippen an den rückwärtigen Kanten der Einschnitte. Als Folge kann der erwähnte sägezahnförmige Abrieb auftreten. Eine Sägezahnbildung im Laufstreifen führt zu einer schnelleren Unbrauchbarkeit des Reifens, kann ferner auch das Abrollgeräusch des Reifens verstärken und die Fahreigenschaften des Fahrzeuges verschlechtern.

Der Erfindung liegt die Aufgabe zugrunde, bei einem Reifen der eingangs genannten Art in den Profilblöcken bzw. Profilrippen eine Sägezahnbildung zumindest weitgehend zu vermeiden.

Gelöst wird die gestellte Aufgabe erfindungsgemäß durch einen Fahrzeugluftreifen gemäß Anspruch 1. Die U-förmig verlaufenden, paarweise angeordneten, durch Gummibrücken voneinander getrennten Einschnitte ersetzen in Profilrippen die oft vorgesehenen durchgehenden Einschnitte, sodass das oben erwähnte ungünstige Verkippen beim Abrollen und Austreten der Profilrippe aus dem Untergrund nicht mehr auftreten kann. Dadurch kommt es zu keiner Sägezahnbildung mehr. In Profilblöcken verleihen die U-förmig verlaufenden Einschnitte den Profilblöcken eine derart günstige Steifigkeit, dass das oben erwähnte Verkippen beim Abrollen und Austreten der Profilblöcke aus dem Untergrund ebenfalls zumindest weitgehend nicht mehr auftritt. Dadurch wird auch in Profilblöcken die unerwünschte Sägezahnbildung weitgehend vermieden. Besonders effektiv lässt sich ein sägezahnförmiger Abrieb unterbinden, wenn erfindungsgemäß die paarweise angeordneten U-förmigen Einschnitte die einzigen Einschnitte in der Profilrippe bzw. in den Profilblöcken der Profilblockreihe sind. Die in den in Draufsicht U-förmig verlaufenden Einschnitten vorhandenen, in bzw. im Wesentlichen in axialer Richtung verlaufenden Einschnittabschnitte stellen gute Traktions- und Griffeigenschaften sicher, die in Umfangsrichtung verlaufenden Einschnittabschnitte verbessern sogar in den seitlichen Richtungen, insbesondere bei Kurvenfahrt, die Traktion, vor allem auch auf nassem oder schneeigen Untergrund.

Eine weitere bevorzugte Maßnahme, die zu einer besonders effektiven Vermeidung eines sägezahnförmigen Abriebs beiträgt, besteht bei Profilblöcken einer Profilblockreihe darin, dass pro Profilblock jeweils ein einziges Paar von in Draufsicht U-förmig verlaufenden Einschnitten vorgesehen ist, bei einer Profilrippe darin, dass die in der Profilrippe angeordneten Paare von in Draufsicht U-förmig verlaufenden Einschnitten einen gegenseitigen Abstand von 10 mm bis 30 mm aufweisen.

Weitere bevorzugte Ausgestaltungen der Einschnittabschnitte der U-förmig verlaufenden Einschnitte sind ebenfalls besonders vorteilhaft, um einen sägezahnförmigen Abrieb zu vermeiden. Eines dieser Merkmale besteht darin, dass die in Umfangsrichtung verlaufenden Einschnittabschnitte der in Draufsicht U-förmig verlaufenden Einschnitte eine Länge von 15 mm bis 35 mm aufweisen, ein weiteres Merkmal darin, dass die Gummibrücken zwischen den in Umfangsrichtung verlaufenden Einschnittabschnitten der in Draufsicht U-förmig verlaufenden Einschnitte eine Breite von 5 mm bis 40 mm aufweisen. Eine weitere, diesbezüglich vorteilhafte Maßnahme besteht darin, dass die von den in Umfangsrichtung verlaufenden Einschnittabschnitten zu den Profilflanken bzw. zu den Profilrippenflanken verlaufenden Einschnittabschnitte eine Erstreckungslänge von 10 mm bis 15 mm besitzen.

Auch der Verlauf der Einschnittabschnitte der U-förmig verlaufenden Einschnitte relativ zur Umfangsrichtung bzw. zur axialen Richtung ist für ein Vermeiden des Auftretens eines sägezahnförmigen Abriebs von gewisser Bedeutung. Bevorzugt ist diesbezüglich eine Ausführung, bei der die in Umfangsrichtung verlaufenden Einschnittabschnitte zur Umfangsrichtung unter einem Winkel von bis zu 30° verlaufen und weiters eine Ausführung, bei der sich die von den in Umfangsrichtung verlaufenden Einschnittabschnitten zu den Profilblockflanken oder den Profilrippenflanken verlaufenden Einschnittabschnitte zur axialen Richtung unter einem Winkel von bis zu 30° erstrecken. Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht eines Umfangsabschnittes einer Profilrippe eines Laufstreifens eines Fahrzeugluftreifens und
Fig. 2 eine Ansicht eines Umfangsabschnittes einer Profilblockreihe eines Laufstreifens eines Fahrzeugluftreifens.

Die Erfindung befasst sich mit einer besonderen Ausgestaltung von Einschnitten in Profilrippen oder in Profilblockreihen von Laufstreifen in Fahrzeugluftreifen radialer Bauart, insbesondere Nutzfahrzeugreifen. Erfindungsgemäß ausgestaltete Einschnitte können jedoch auch in den Profilpositiven von Reifen für Personenkraftwagen, Reifen für Light Trucks, Vans, Motorräder und dergleichen vorgesehen werden.

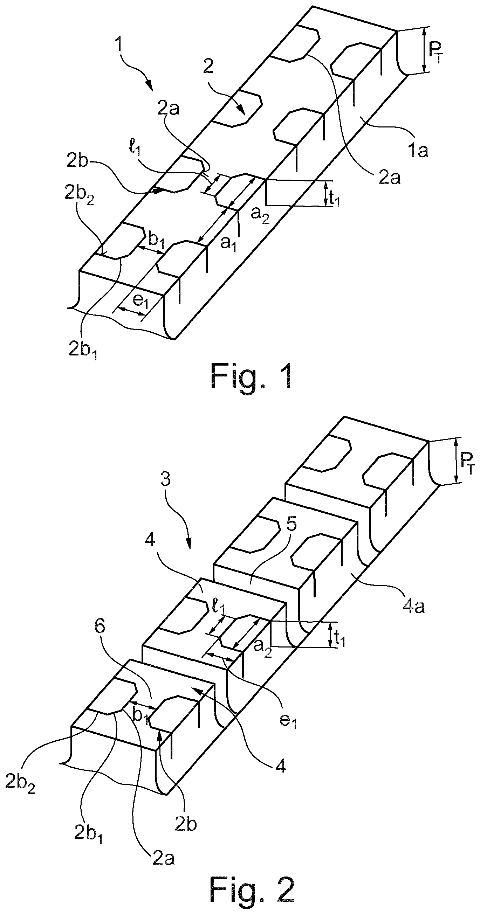

Fig. 1 zeigt einen Umfangsabschnitt einer Profilrippe 1, die beidseitig durch je eine in Umfangsrichtung umlaufende, in Fig. 1 nicht gezeigte Umfangsrille begrenzt ist. Die Profilrippe 1 weist keine sie durchquerenden Querrillen oder Quereinschnitte auf. Die Umfangsrillen erstrecken sich über den Umfang beispielsweise gerade oder in Wellen- bzw. Zickzackform. Solche Ausgestaltungen von Umfangsrillen sind aus dem Stand der Technik hinlänglich bekannt. Der Laufstreifen des Fahrzeugluftreifens kann zumindest eine Profilrippe 1, insbesondere mehrere Profilrippen 1, aufweisen. Weitere Profilrippen im Laufstreifen können auch abweichend zur Profilrippe 1 ausgestaltet sein.

Fig. 2 zeigt einen Umfangsabschnitt einer Profilblöcke 4 aufweisenden Profilblockreihe 3, wobei bei der dargestellten vereinfachten Ausführung die Profilblöcke 4 in Umfangsrichtung voneinander durch Querrillen 5 getrennt sind und die Profilblöcke 4 in Draufsicht rhombenförmig sind. Mögliche konkrete Ausgestaltungen von Profiblöcken 4 sind aus dem Stand der Technik hinlänglich bekannt. Die Profilblockreihe 3 ist an jeder Seite durch je eine in Umfangsrichtung umlaufende, in Fig. 2 nicht gezeigte Umfangsrille begrenzt, die wie oben erwähnt in Umfangsrichtung beispielsweise gerade umläuft, jedoch auch in Wellen- bzw. Zickzackform verlaufen kann. Im Laufstreifen eines Fahrzeugluftreifens kann zumindest eine Profilrippe 1 in Kombination mit einer Profilblockreihe 3 vorgesehen sein. Weitere Profilrippen und/oder Profilblockreihen können herkömmlich gestaltet sein.

Die die Profilrippe 1 bzw. die Profilblockreihe 3 seitlich begrenzenden nicht gezeigten Umfangsrillen sind ferner in der für den jeweiligen Reifentyp vorgesehenen maximalen Profiltiefe, die in den Figuren mit P_{T} bezeichnet ist, ausgeführt. Auch die Querrillen 5 in der Profilblockreihe 3 können zumindest abschnittsweise eine Tiefe aufweisen, die der Profiltiefe P_{T} entspricht, sie können jedoch auch seichter ausgeführt sein als die Umfangsrillen.

In jedem Profilblock 4 der Profilblockreihe 3 ragt von jeder der seitlichen, die nicht gezeigten Umfangsrillen begrenzenden Blockflanken 4a ausgehend je ein in Draufsicht U-förmig verlaufender Einschnitt 2 in den Profilblock 4. Pro Profilblock 4 ist daher mittig bzw. im Wesentlichen mittig ein Paar von in Draufsicht U-förmigen Einschnitten 2 vorgesehen, wobei die Einschnitte 2 einander gegenüberliegen. In der Profilrippe 1 sind, in Umfangsrichtung voneinander beabstandet, ebenfalls in Draufsicht U-förmig verlaufende Einschnitte 2 in Paaren ausgebildet, wobei der eine Einschnitt 2 jedes Einschnittpaares von der einen Profilrippenflanke 1a, der zweite Einschnitt 2 von der zweiten Profilrippenflanke 1a ausgehend in die Profilrippe 1 hinein verläuft. In Umfangsrichtung weisen die Einschnitte 2 jeweils einen gegenseitigen Abstand a₁ von 10 mm bis 30 mm, insbesondere bis 20 mm, auf, wobei a₁ zwischen den Eimündungsstellen von in Umfangsrichtung benachbarten Einschnitten 2 ermittelt wird. Je nach der Ausgestaltung der Profilrippe 1 bzw. der Profilblöcke 4 können die Einschnitte 2 der Einschnittpaare in Umfangsrichtung auch gegeneinander etwas versetzt sein.

Jeder Einschnitt 2 weist in Folge seiner U-Form einen in Umfangsrichtung und gerade verlaufenden Einschnittabschnitt 2a und zwei von den Enden des Einschnittabschnittes 2a ausgehende und bis zur jeweiligen Profilblockflanke 4a bzw. zur jeweiligen Profilrippenflanke 1a verlaufende Einschnittabschnitte 2b auf. Bei den dargestellten Ausführungen setzen sich die Einschnittabschnitte 2b jeweils aus einem unter einem stumpfen Winkel zum Einschnittabschnitt 2a verlaufenden Abschnittsteil 2b₁ und einem unter einem stumpfen Winkel zu diesem verlaufenden Abschnittsteil 2b₂ zusammen, wobei bei den gezeigten Ausführungen der Abschnittsteil 2b₂ jeweils in axialer Richtung verläuft. Anstelle der Abschnittsteile 2b₁ können bogenförmig, vorzugsweise über Viertelkreise, verlaufende Übergangsabschnitte vorgesehen sein. Die Abschnittsteile 2b₂ münden vorzugsweise in einem rechten Winkel an den Profilrippenflanken 1a bzw. den Profilblockflanken 4a in die Umfangsrillen. Die Einschnittabschnitte 2a können ferner unter einem spitzen Winkel von bis zu 30° zur exakten Umfangsrichtung verlaufen. Auch die Abschnittsteile 2b₂ können zur exakten axialen Richtung unter einem Winkel von bis zu 30° verlaufen.

Die Länge l₁ der Einschnittabschnitte 2a beträgt 15 mm bis 35 mm, die Erstreckung e₁ der Einschnittabschnitte 2b in axialer Richtung beträgt 10 mm bis 15 mm. Am Einmündungsbereich der Einschnittabschnitte 2b an den Profilrippenflanken 1a bzw. den Profilblockflanken 4a weisen die Enden der Einschnittabschnitte 2b in Umfangsrichtung einen gegenseitigen Abstand a₂ auf, welcher um 2 mm bis 7 mm größer ist als die Länge der Einschnittabschnitte 2a. Die Breite der Einschnitte 2 ist insbesondere konstant und beträgt 0,4 mm bis 1,2 mm, insbesondere 0,8 mm bis 1,2 mm. Die Einschnitte 2 weisen eine Tiefe t₁ auf, welche 30 % bis 90 % der Profiltiefe P_{T} beträgt, wobei die Tiefe t₁ der Einschnitte 2 über ihren Verlauf variieren kann.

Zwischen den gerade verlaufenden Einschnittabschnitten 2a der Einschnitte 2 verbleibt jeweils eine Gummibrücke 6 mit einer Breite b₁ von 5 mm bis 40 mm, insbesondere 10 mm bis 20 mm. Die Einschnitte 2 sorgen analog zu den üblicherweise vorgesehenen, Profilblöcke und Profilrippen durchquerenden Einschnitten für gute Traktions- und Bremseigenschaften des Reifens und unterstützen die Griffeigenschaften. Die Gummibrücken 6 zwischen den Einschnittabschnitten 2a verleihen der Profilrippe 1 bzw. den Profilblöcken 4 der Profilblockreihe 3 eine Steifigkeit, die einer Sägezahnbildung entgegenwirkt. Als Sägezahnbildung wird bekannterweise eine unregelmäßige Schrägabnützung von Profilblöcken und von Profilrippen bezeichnet, die von der Seite her betrachtet an Sägezähne erinnert. Sägezahnbildung entsteht vor allem beim Austreten von Profilrippen mit in axialer Richtung durchgehenden Einschnitten und von Profilblöcken aus dem Untergrund während des Abrollens des Reifens in Folge einer ungünstigen Steifigkeitsverteilung in den Profilrippen bzw. Profilblockreihen.

### Bezugszeichenliste

- 1: Profilrippe
- 1a: Profilrippenflanke
- 2: Einschnitt
- 2a, 2b: Einschnittabschnitt
- 2b₁, 2b₂: Abschnittsteil
- 3: Profilblockreihe
- 4: Profilblock
- 4a: Blockflanke
- 5: Querrille
- 6: Gummibrücke
- a₁, a₂: Abstand
- b₁: Breite
- e₁: Erstreckung
- l₁: Länge
- P_{T}: Profiltiefe
- t₁: Tiefe

## Patentansprüche

1. Fahrzeugluftreifen mit einem Laufstreifen mit zumindest einer Profilrippe (1) und/oder zumindest einer Profilblockreihe (3) mit in Umfangsrichtung aufeinander folgenden Profilblöcken (4), wobei die Profilrippe (1) bzw. die Profilblockreihe (3) seitlich Profilrippenflanken (1a) bzw. Profilblockflanken (4a) aufweist, die jeweils eine in Umfangsrichtung umlaufenden Umfangsrille begrenzen, wobei die Profilrippe (1) bzw. die Profilblöcke (4) der Profilblockreihe (3) mit in Draufsicht U-förmig verlaufenden, eine Breite von 0,4 mm bis 1,2 mm und eine Tiefe (t₁) von 30% bis 90% der Profiltiefe (P_{T}) aufweisenden Einschnitten (2) versehen sind, die sich jeweils aus einem in Umfangsrichtung verlaufenden Einschnittabschnitt (2a) und zwei von diesem zu den seitlichen Profilblockflanken (4a) bzw. Profilrippenflanken (1a) verlaufenden Einschnittabschnitten (2b) zusammensetzen,
wobei die U-förmig verlaufenden Einschnitte (2) in der Profilrippe (1) bzw. in den Profilblöcken (4) der Profilblockreihe (3) einander paarweise und in Bezug auf die Umfangsrichtung versatzfrei gegenüberliegen, wobei die beiden in Umfangsrichtung verlaufenden Einschnittabschnitte (2a) der paarweise angeordneten Einschnitte (2) in axialer Richtung durch eine unstrukturierte Gummibrücke (6) voneinander getrennt sind, wobei sich die zu den Profilblockflanken (4a) oder den Profilrippenflanken (1a) verlaufenden Einschnittabschnitte (2b) aus Abschnittsteilen (2b₁, 2b₂) zusammensetzen, die miteinander und mit den in Umfangsrichtung verlaufenden Einschnittabschnitten (2a) stumpfe Winkel einschließen,
**dadurch gekennzeichnet,**
**dass** die paarweise angeordneten U-förmigen Einschnitte (2) die einzigen Einschnitte in der Profilrippe (1) bzw. in den Profilblöcken (4) der Profilblockreihe (3) sind.

2. Fahrzeugluftreifen nach Anspruch 1, **dadurch gekennzeichnet, dass** in den Profilblöcken (4) der Profilblockreihe (3) jeweils ein einziges Paar von in Draufsicht U-förmig verlaufenden Einschnitten (2) vorhanden ist.

3. Fahrzeugluftreifen nach Anspruch 1, **dadurch gekennzeichnet, dass** die in der Profilrippe (1) angeordneten Paare von in Draufsicht U-förmige verlaufenden Einschnitten (2) einen gegenseitigen Abstand (a₁) von 10 mm bis 30 mm aufweisen.

4. Fahrzeugluftreifen nach einem der Ansprüche 1 bis 3, **dadurch gekennzeichnet, dass** die in Umfangsrichtung verlaufenen Einschnittabschnitte (2a) der in Draufsicht U-förmig verlaufenden Einschnitte (2) eine Länge (l₁) von 15 mm bis 35 mm aufweisen.

5. Fahrzeugluftreifen nach einem der Ansprüche 1 bis 4, **dadurch gekennzeichnet, dass** die Gummibrücken (6) zwischen den in Umfangsrichtung verlaufenden Einschnittabschnitten (2a) der in Draufsicht U-förmig verlaufenden Einschnitte (2) eine Breite (b₁) von 5 mm bis 40 mm aufweisen.

6. Fahrzeugluftreifen nach einem der Ansprüche 1 bis 5, **dadurch gekennzeichnet, dass** die von den in Umfangsrichtung verlaufenden Einschnittabschnitten (2a) zu den Profilblockflanken (4a) bzw. zu den Profilrippenflanken (1a) verlaufenden Einschnittabschnitte (2b) eine Erstreckungslänge (e₁) von 10 mm bis 15 mm aufweisen.

7. Fahrzeugluftreifen nach einem der Ansprüche 1 bis 6, **dadurch gekennzeichnet, dass** die in Umfangsrichtung verlaufenden Einschnittabschnitte (2a) zur Umfangsrichtung unter einem Winkel von bis zu 30° verlaufen.

8. Fahrzeugluftreifen nach einem der Ansprüche 1 bis 7, **dadurch gekennzeichnet, dass** sich die von den in Umfangsrichtung verlaufenden Einschnittabschnitten (2a) zu den Profilblockflanken (4a) oder den Profilrippenflanken (1a) verlaufenden Einschnittabschnitte (2b) zur axialen Richtung unter einem Winkel von bis zu 30° erstrecken.

## Claims

1. Pneumatic vehicle tyre comprising a tread with at least one profile rib (1) and/or at least one row of profile blocks (3), with profile blocks (4) following one another in the circumferential direction, the profile rib (1) or the row of profile blocks (3) laterally having profile rib flanks (1a) or profile block flanks (4a), respectively, which in each case bound a circumferential groove running around in the circumferential direction, wherein the profile rib (1) or the profile blocks (4) of the row of profile blocks (3) are provided with sipes (2), which in plan view run in a U-shaped manner, have a width of 0.4 mm to 1.2 mm and a depth (t₁) of 30% to 90% of the profile depth (P_{T}) and which are respectively made up of a sipe portion (2a) running in the circumferential direction and two sipe portions (2b) running from the first sipe portion to the lateral profile block flanks (4a) or profile rib flanks (1a), wherein the sipes (2) of a U-shaped form in the profile rib (1) or in the profile blocks (4) of the row of profile blocks (3) lie opposite one another in pairs and without any offset with respect to the circumferential direction, wherein the two sipe portions (2a) running in the circumferential direction of the sipes (2) arranged in pairs are separated from one another in the axial direction by an unstructured rubber bridge (6), wherein the sipe portions (2b) that run to the profile block flanks (4a) or the profile rib flanks (1a) are made up of portion parts (2b₁, 2b₂) which form obtuse angles with one another and with the sipe portions (2a) running in the circumferential direction,
**characterized**
**in that** the U-shaped sipes (2) arranged in pairs are the only sipes in the profile rib (1) or in the profile blocks (4) of the row of profile blocks (3).

2. Pneumatic vehicle tyre according to Claim 1, **characterized in that** in the profile blocks (4) of the row of profile blocks (3) there is in each case a single pair of sipes (2) of a U-shaped form in plan view.

3. Pneumatic vehicle tyre according to Claim 1, **characterized in that** the pairs of sipes (2) of a U-shaped form in plan view that are arranged in the profile rib (1) have a mutual spacing (a₁) of 10 mm to 30 mm.

4. Pneumatic vehicle tyre according to one of Claims 1 to 3, **characterized in that** the sipe portions (2a) running in the circumferential direction of the sipes (2) of a U-shaped form in plan view have a length (l₁) of 15 mm to 35 mm.

5. Pneumatic vehicle tyre according to one of Claims 1 to 4, **characterized in that** the rubber bridges (6) between the sipe portions (2a) running in the circumferential direction of the sipes (2) of a U-shaped form in plan view have a width (b₁) of 5 mm to 40 mm.

6. Pneumatic vehicle tyre according to one of Claims 1 to 5, **characterized in that** the sipe portions (2b) running from the sipe portions (2a) running in the circumferential direction to the profile block flanks (4a) or to the profile rib flanks (1a) have a length of extent (e₁) of 10 mm to 15 mm.

7. Pneumatic vehicle tyre according to one of Claims 1 to 6, **characterized in that** the sipe portions (2a) running in the circumferential direction run at an angle of up to 30° in relation to the circumferential direction.

8. Pneumatic vehicle tyre according to one of Claims 1 to 7, **characterized in that** the sipe portions (2b) running from the sipe portions (2a) running in the circumferential direction to the profile block flanks (4a) or to the profile rib flanks (1a) extend at an angle of up to 30° in relation to the axial direction.

## Revendications

1. Pneumatique de véhicule comprenant une bande de roulement avec au moins une nervure profilée (1) et/ou au moins une rangée de blocs profilés (3) avec des blocs profilés (4) successifs dans la direction périphérique, la nervure profilée (1) ou la rangée de blocs profilés (3) présentant latéralement des flancs de nervure profilée (1a) ou des flancs de blocs profilés (4a) qui délimitent à chaque fois une rainure périphérique s'étendant sur le pourtour dans la direction périphérique, la nervure profilée (1) ou les blocs profilés (4) de la rangée de blocs profilés (3) étant pourvus d'entailles (2) s'étendant en forme de U en vue de dessus, présentant une largeur de 0,4 mm à 1,2 mm et une profondeur (t₁) de 30 % à 90 % de la profondeur du profilé (P_{T}), lesquelles se composent à chaque fois d'une portion d'entaille (2a) s'étendant dans la direction périphérique et de deux portions d'entaille (2b) s'étendant depuis celles-ci jusqu'aux flancs latéraux de blocs profilés (4a) ou jusqu'aux flancs de nervure profilée (1a),
les entailles (2) s'étendant en forme de U dans la nervure profilée (1) ou dans les blocs profilés (4) de la rangée de blocs profilés (3) étant opposées les unes aux autres par paires et par rapport à la direction périphérique sans décalage, les deux portions d'entaille (2a) s'étendant dans la direction périphérique des entailles (2) disposées par paires étant séparées l'une de l'autre dans la direction axiale par un pont en caoutchouc non structuré (6), les portions d'entaille (2b) s'étendant vers les flancs de blocs profilés (4a) ou vers les flancs de nervure profilée (1a) étant constituées de parties de portions (2b₁, 2b₂), qui forment des angles obtus les unes avec les autres et avec les portions d'entaille (2a) s'étendant dans la direction périphérique,
**caractérisé en ce que**
les entailles (2) en forme de U disposées par paires sont les seules entailles dans la nervure profilée (1) ou dans les blocs profilés (4) de la rangée de blocs profilés (3).

2. Pneumatique de véhicule selon la revendication 1, **caractérisé en ce que** dans les blocs profilés (4) de la rangée de blocs profilés (3) est à chaque fois prévue une paire unique d'entailles (2) s'étendant en forme de U en vue de dessus.

3. Pneumatique de véhicule selon la revendication 1, **caractérisé en ce que** les paires d'entailles (2) s'étendant en forme de U en vue de dessus, disposées dans la nervure profilée (1), présentent un espacement mutuel (a₁) de 10 mm à 30 mm.

4. Pneumatique de véhicule selon l'une quelconque des revendications 1 à 3, **caractérisé en ce que** les portions d'entaille (2a) s'étendant dans la direction périphérique des entailles (2) s'étendant forme de U en vue de dessus présentent une longueur (l₁) de 15 mm à 35 mm.

5. Pneumatique de véhicule selon l'une quelconque des revendications 1 à 4, **caractérisé en ce que** les ponts en caoutchouc (6) entre les portions d'entaille (2a) s'étendant dans la direction périphérique des entailles (2) s'étendant en forme de U en vue de dessus présentent une largeur (b₁) de 5 mm à 40 mm.

6. Pneumatique de véhicule selon l'une quelconque des revendications 1 à 5, **caractérisé en ce que** les portions d'entaille (2b) s'étendant depuis les portions d'entaille (2a) s'étendant dans la direction périphérique vers les flancs de blocs profilés (4a) ou vers les flancs de nervure profilée (1a) présentent une étendue en longueur (e₁) de 10 mm à 15 mm.

7. Pneumatique de véhicule selon l'une quelconque des revendications 1 à 6, **caractérisé en ce que** les portions d'entaille (2a) s'étendant dans la direction périphérique s'étendent suivant un angle allant jusqu'à 30° par rapport à la direction périphérique.

8. Pneumatique de véhicule selon l'une quelconque des revendications 1 à 7, **caractérisé en ce que** les portions d'entaille (2b) s'étendant depuis les portions d'entaille (2a) s'étendant dans la direction périphérique vers les flancs de blocs profilés (4a) ou vers les flancs de nervure profilée (1a) s'étendent suivant un angle allant jusqu'à 30° par rapport à la direction axiale.
